# EUROPÄISCHE PATENTSCHRIFT

(11) **EP 1 997 609 B1**
(45) Veröffentlichungstag und Bekanntmachung des Hinweises auf die Patenterteilung: **25.09.2013**
(21) Anmeldenummer: 08154044.5
(22) Anmeldetag: 04.04.2008
(51) Int. Cl.: B29C 33/76, B29C 47/92

(54) **Fertigungseinrichtung für schlauchförmige Gebilde und rohrförmige Dorne hierzu**
Assembly device for tubular structures and tubular bolts for this purpose
Dispositif de fabrication pour éléments tubulaires et mandrins tubulaires correspondants

(30) Priorität: 01.06.2007 DE 102007025647
(43) Veröffentlichungstag der Anmeldung: 03.12.2008
(73) Patentinhaber: ContiTech Luftfedersysteme GmbH, 30165 Hannover (DE)
(72) Erfinder: Kranz, Harald, 31008 Elze (DE)
(74) Vertreter: Finger, Karsten

(56) Entgegenhaltungen:
- EP-A2- 1 748 383
- AT-U1- 7 303
- DE-A1- 10 025 350
- DE-C1- 10 229 073
- DE-U1-202005 007 844
- US-A1- 2006 082 010

## Beschreibung

Die Erfindung betrifft eine Fertigungseinrichtung für schlauchförmige Gebilde durch Aufextrudieren von Gummi und/oder Kunststoff auf rohrförmige Dorne. Die Erfindung betrifft weiterhin einen rohrförmigen Dorn als Träger zur Herstellung schlauchartiger Gebilde durch Auftextrudieren von Gummi und/oder Kunststoff auf die Domoberfläche.

Zur Herstellung von Schläuchen ist bekannt, fortlaufend aneinander gekoppelte, zylindrische Dome in einer Förderrichtung vorzutreiben und Kautschuk- und Festigkeitsträgerschichten auf die Dome aufzubringen. Derartige Schläuche werden beispielsweise für Luftfederbälge in Fahrzeugen verwendet.

DE 102 29 081 A1 offenbart ein automatisiertes Schlauchherstellungsverfahren und eine Vorrichtung hierzu. Zum Detektieren von Verbindungsstellen aufeinander folgender Dome wird ein Materialunterschied an der Verbindungsstelle zweier Dome detektiert und zur Positionierung eines Schneidkopfes ausgewertet.

Aus DE 100 25 350 ist zur Kontrolle und Überwachung eines Fördergurtes aus Gummi bekannt, in das Fördergut einen Transponder zu integrieren. Mit Hilfe einer Abtasteinheit wird der Transponder detektiert, um eine genaue Gurtlagebestimmung durchzuführen.

EP 1 748 383 A2 offenbart ein Metallrohr mit einem Funkidentifikationstransponder RFID, der als Aufkleber auf die äußere Oberfläche des Metallrohrs aufgeklebt und mit einem Abstand von weniger als 1 mm von der äußeren Oberfläche angeordnet ist.

Das Problem der Nutzung von Funktranspondern bei Metallrohren ist jedoch, dass diese oftmals nicht einfach, wie in der EP 1 748 383 A2, als Aufkleber auf die Dornoberfläche aufgebracht oder in eine Einsenkung des Domes eingelassen werden können. Vielmehr ist zu beachten, dass rohrförmige Dome in der Regel aus Metall, insbesondere aus einer Aluminiumlegierung, gebildet sind. Hierdurch werden die Abstrahlcharakteristika des Funktransponders negativ beeinflusst. Der metallische Dorn bewirkt eine Abschirmung des Transpondersignals. Das Signal kann sich nur halbkugelförmig nach oben durch die Kunststoffschicht ausbreiten. Zudem muss sichergestellt werden, dass die Oberfläche der Dome im Bereich des Funktransponders hinsichtlich der erzielbaren Fertigungsqualität nicht beeinträchtigt wird.

Passive Funktransponder haben zudem das Problem, dass eine ausreichende Signalenergie bei der Funktransponderabfrage in den Funktransponder eingekoppelt werden muss, um ein empfangbares Antwortsignal zu erhalten. Die Abschirmungscharakteristik in der Umgebung der Funktransponder ist daher und zur Sicherstellung einer für die raue Umgebung eines Fertigungsprozesses von besonderer Bedeutung.

DE 102 29 073 C1 offenbart eine Fertigungseinrichtung gemäß dem Oberbegriff des Anspruchs 1.

Bei der fortlaufenden Schlauchfertigung mit Domen besteht ein Bedarf, die Qualität der Fertigung zu überwachen und den Fertigungsprozess für die einzelnen Schläuche nachzuvollziehen.

Aufgabe der Erfindung ist es daher, eine verbesserte Fertigungseinrichtung für schlauchförmige Gebilde sowie verbesserte rohrförmige Dome hierzu zu schaffen. Die Aufgabe wird mit einer Fertigungseinrichtung gemäß Anspruch 1 gelöst.

Es wird somit vorgeschlagen, mit Hilfe eines Funktransponders zu ermöglichen, gefertigte Schlauchabschnitte bestimmten Domen zuzuordnen und für jeden Dorn die Anzahl der auf dem Dorn gefertigten Schlauchabschnitte zu bestimmen. Für den Fall, dass nachträglich ein Dorn als fehlerhaft erkannt wird, können die auf dem Dorn gefertigten Schlauchabschnitte und möglicherweise bereits aus den Schläuchen gefertigte Endprodukte, wie zum Beispiel Luftfedern, identifiziert werden, um diese ggf. zurückzurufen. Weiterhin kann die Aussortierung bzw. Überarbeitung von Domen anhand der mit Hilfe der Funktransponder erfassbaren Anzahl von Durchläufen pro Dorn gesteuert werden.

Die Nutzung von Funktranspondern in rohrförmigen Domen gelingt durch das Festlegen des Funktransponders mit einer verschleißfesten Kunststoffmasse in der Ein-senkung und die Bildung der Domoberfläche durch die Kunststoffmasse im Bereich der Einsenkung. Es hat sich gezeigt, dass auf diese Weise die Funktransponder im Fertigungsprozess auch bei aufextrudierten Gummi- und Festigkeitslagen auslesbar sind und die geringe Kunststoffmasse den Fertigungsprozess nicht beeinträchtigt, auch wenn Gummi und/oder Kunststoffschichten auf die Domoberfläche aufextrudiert werden.

Besonders vorteilhaft ist es, wenn der Dorn aus Metall gebildet und in der Einsenkung zwischen dem Metalldom und dem Funktransponder eine Schicht aus der Kunststoffmasse vorgesehen ist. Durch die Zwischenschicht zwischen dem aus Metall gebildeten Boden der Einsenkung des Domes und dem Funktransponder wird erreicht, dass die Abstrahlcharakteristik des Funktransponders nicht durch die angrenzende Metallschicht beeinträchtigt wird.

Als Funktransponder können insbesondere passive Transponder eingesetzt werden, die bei einer drahtlosen Abfrage durch ein Funksignal mit Energie des Funksignals versorgt werden und mit Hilfe dieser Energie im Funktransponder gespeicherte Informationen über den zugeordneten Dorn aussenden. Eine derartige Information kann insbesondere eine dem Dorn zugewiesene Dornkennung sein, die im Funktransponder abgespeichert ist.

Bei der Fertigung schlauchförmiger Gebilde mit Hilfe der oben beschriebenen rohrförmigen Dome ist es damit möglich, mit Hilfe der Transponder-Ausleseeinheit die in den Funktranspondern der Dome gespeicherten Informationen auszulesen und zu Zwecken der Qualitätssicherung auszuwerten. Der Verschleiß der einzelnen Dome kann durch die Erfassung der Menge der auf einem Dorn herstellten schlauchartigen Gebilde, d.h. der Erfassung der Durchläufe der Dome durch die Fertigungseinrichtung, bestimmt werden. Eine Zuordnung von Schlauchabschnitten bzw. aus den Schlauchabschnitten hergestellter Produkte, wie beispielsweise Luftfedern, zu den einzelnen Domen wird dadurch ermöglicht, dass eine den Schlauchabschnitten zugewiesene Schlauchabschnittsnummer der Dornkennung für den Dorn zugeordnet wird, auf dem der Schlauchabschnitt gefertigt wurde. Diese Zuordnung wird dann abgespeichert und kann ausgewertet werden.

Da sich das Transpondersignal nur eine Kunststoffabdeckung nach oben ausbreiten kann, die rotarische Orientierung der Dome aber beliebig ist, ist es vorteilhaft, das Signal mittels eine Ringantenne auszulesen, durch die die Dome während des Fertigungsprozesses hindurchgeführt werden.

Die Erfindung wird beispielhaft nachfolgend anhand der beigefügten Zeichnungen näher erläutert. Es zeigen:
- Figur 1: Skizze eines zylindrischen Domes mit Einsenkung und Funktransponder in der Einsenkung;
- Figur 2-: Ausschnittsansicht eines zylindrischen Doms im Bereich der Einsenkung;
- Figur 3 -: Skizze einer Fertigungseinrichtung mit Transponder-Ausleseeinheit und Datenverarbeitungseinheit.

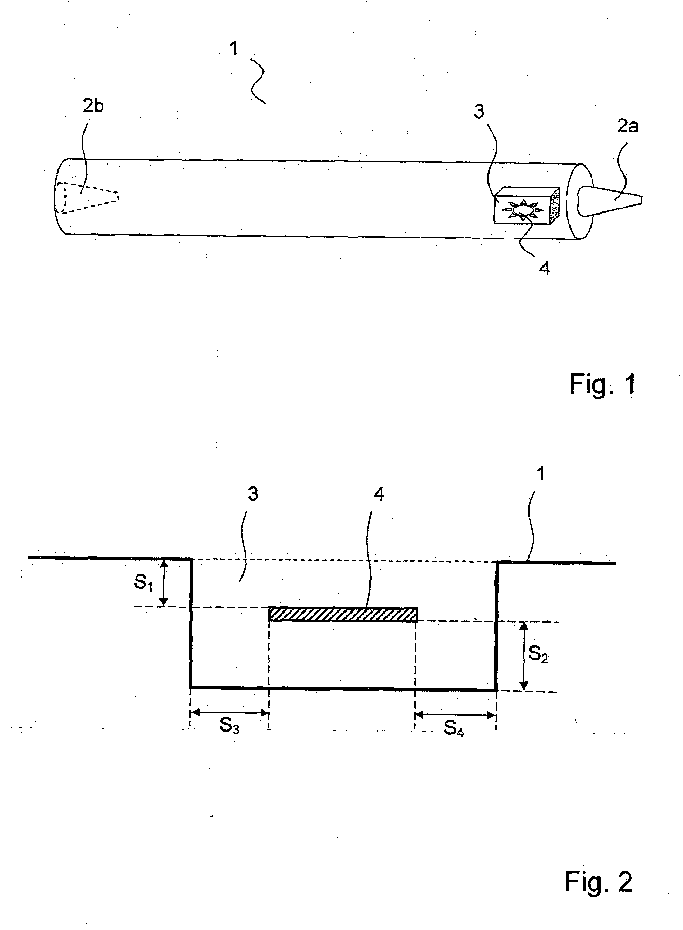

Figur 1 lässt eine Skizze eines zylinderförmigen Doms 1 erkennen, der an einem Ende eine Dornkupplung 2a zum Ankoppeln an eine korrespondierende Dornkupplung 2b eines vorhergehendes Domes 1 hat.

In die Dornoberfläche des Doms 1 ist eine Einsenkung 3 eingelassen, in die ein Funktransponder 4 eingelassen und mit einer Kunststoffmasse in der Einsenkung 3 festgelegt ist. Die Oberseite der Kunststoffmasse ist so abgerundet, dass sie an die zylinderförmige Dornoberfläche angepasst ist und nahtlos daran anschließt.

Zwischen dem Boden und den Seitenwänden der Einsenkung 3 und dem Funktransponder 4 ist jeweils eine Kunststoffschicht vorgesehen, so dass der Funktransponder 4 nicht direkt auf dem aus einer Aluminiumlegierung gebildeten Dorn 1 aufliegt. Auf diese Weise wird verhindert, dass das elektromagnetische Feld bei der Funkabfrage zu stark durch den Dorn 1 gedämpft wird.

Der Funktransponder 4 ist beispielsweise ein passiver RFID (Radio frequency identification)-Transponder, der bei einer drahtlosen Abfrage durch ein Funksignal mit Energie des Funksignals versorgt wird und mit Hilfe dieser Energie im Funktransponder 4 gespeicherte Information über den zugeordneten Dorn 1 aussendet. Diese Information ist insbesondere eine Dornkennung.

Figur 2 lässt eine Ausschnittsansicht eines zylindrischen Doms 1 im Bereich der Einsenkung 3 erkennen. Es wird deutlich, dass der Funktransponder 4 im Abstand S₁ zu den Wänden des metallischen Doms 1 mit Hilfe der Kunststoffmasse in der Einsenkung fixiert ist. Die Kunststoffmasse ist viel weicher als die Dornoberfläche, aber nicht abschirmend.

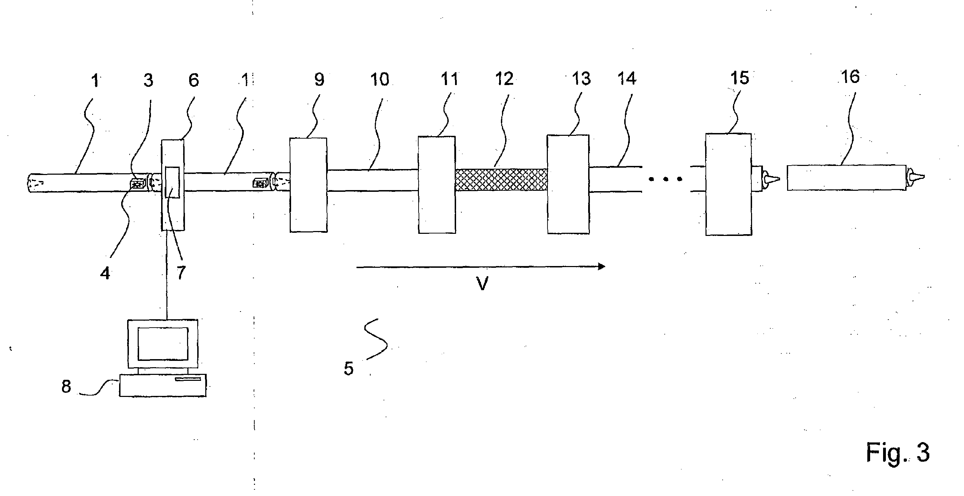

Figur 3 lässt eine Fertigungseinrichtung 5 erkennen, bei der die in der Figur 1 skizzierten Dome 1 aneinander gekoppelt werden und kontinuierlich in eine Vorschubrichtung V durch die Fertigungseinrichtung transportiert werden. Nach der Ankopplung der Dome 1 aneinander mit Hilfe eines nicht dargestellten Dornkoppelaggregats wird mit Hilfe einer Transponder-Ausleseeinheit 6 eine Dornkennung aus dem Funktransponder 4 eines durch die Transponder-Ausleseeinheit fahrenden Doms 1 ausgelesen. Hierzu wird mit einer Transponder-Ausleseantenne 7 ein Auslessignal auf einer geeigneten Frequenz ausgesendet, das den Funktransponder 4 mit Energie versorgt und bewirkt, dass eine in einem Speicher des Funktransponders 4 abgelegte Dornkennung für den zugeordneten Dorn 1 aus dem Speicher ausgelesen und mit Hilfe des Funktransponders 4 ausgesendet wird. Die ausgesendete Dornkennung wird mit der vorzugsweise als Ringantenne ausgeführten Transponder-Auslesean-tenne 7 empfangen und durch die Transponder-Ausleseeinheit 6 ausgewertet. Hierzu ist die Transponder-Ausleseeinheit 6 mit einer Datenverarbeitungseinheit 8 verbunden, in der die ausgelesene Dornkennung abgelegt wird. Dieser Dornkennung wird in der Datenverarbeitungseinheit 8 mindestens eine laufende Nummer für die auf dem Dorn 1 im Folgenden hergestellten Schlauchabschnitte zugeordnet. Diese laufende Nummern für die Schlauchabschnitte können später auf die hergestellten Schläuche aufgebracht werden, beispielsweise, indem auf die Oberfläche der Schlauchabschnitte mit den laufenden Schlauchnummern versehene Aufkleber aufgebracht werden. Auch eine Laserkennzeichnung oder ähnliches ist möglich.

Da die Vorschubgeschwindigkeit der Dome 1 bekannt ist, können die einzelnen Dome 1 im Fertigungsprozess einfach nachverfolgt werden, ohne dass eine weitere Auslesung des Funktransponders 4 erforderlich ist. Weiterhin ist es durch die Transpondertechnik möglich zu überprüfen, ob die richtigen Dome 1 (Werkzeuge) im Einsatz sind. Eine Prozessüberwachung ist noch vollständiger möglich, wenn die Domenkennungen auch beim Rücktransport ausgelesen werden. Dann kann beispielsweise ein Ausschleusen von Domen 1 erfolgen, wenn anhand der Domenkennung beispielsweise erkannt wurde, dass eine Überprüfung, Überarbeitung oder ein Austausch erforderlich ist.

Im weiteren Fertigungsprozess wird mit einem Extruder 9 eine erste Schicht 10, beispielsweise aus Kautschuk (Gummi) auf die Folge von Domen 1 in einem kontinuierlichen Prozess aufgebracht. Auf diese Schicht 10 wird mit einer Spiralisiervorrichtung 11 anschließend eine Festigkeitsschicht 12 aufgebracht, indem ein Gewebe auf die Schicht aufspiralisiert wird. Anschließend wird auf diese Festigkeitsschicht 12 mit einem weiteren Extruder 13 eine weitere Kautschukschicht 14 aufgetragen. Die Schritte des Aufspiralisierens von Festigkeitsschichten 12 und Kautschukschichten 14 kann mehrfach wiederholt werden. Insbesondere sollte das die Festigkeitsschicht 12 bildende Fadengelege abwechselnd gegensinnig aufspiralisiert werden.

Am Ende des Fertigungsprozesses wird der kontinuierliche Schlauch mit einer Trennvorrichtung 15 in Schlauchabschnitte 16 aufgeteilt und diese Schlauchabschnitte 16, die etwa der Länge eines Domes entsprechen, sowie der entsprechende Dorn 1, auf dem sich der Schlauchabschnitt befindet, wieder voneinander getrennt. Die auf einem Dorn 1 befindlichen Schlauchabschnitte 16 können in kleinere Abschnitte unterteilt werden und mit Hilfe einer nicht dargestellten Abziehvorrichtung von dem Dorn 1 abgezogen werden.

Bei diesem kontinuierlichen Fertigungsprozess stellt die Transponder-Ausleseeinheit 6 mit der angeschlossenen Datenverarbeitungseinheit 8 sicher, dass die Schlauchabschnitte 16 mit den Domen 1 in Verbindung gebracht werden können, auf denen sie gefertigt wurden. Zudem kann die Anzahl der Durchläufe pro Dorn 1 durch die Fertigungseinrichtung 5 erfasst und zur Qualitätssicherung genutzt werden. So kann nach Erreichen einer festgelegten Anzahl von Durchläufen jeder Dorn 1 einer Überprüfung unterzogen oder eine Aussonderung der Dome 1 nach einer erreichten maximalen Durchlaufanzahl veranlasst werden.

## Patentansprüche

1. Fertigungseinrichtung (5) für schlauchförmige Gebilde durch Aufextrudieren von Gummi und/oder Kunststoff auf fortlaufend aneinander gekoppelte und in einer Vorschubrichtung durch die Fertigungseinrichtung transportierten rohrförmige Dorne (1), **dadurch gekennzeichnet, dass** die Dorne mit einem Funktransponder (4) versehen sind, welcher zur Abspeicherung und Aussendung einer dem Dorn (1) zugewiesenen Dornkennung vorgesehen ist, **gekennzeichnet durch** mindestens eine Transponder-Ausleseeinheit (6) mit einer Funkantenne (7) zum Auslesen von in Funktranspondern (4) der Dome (1) gespeicherten Informationen und einer mit der mindestens einen Transponder-Ausleseeinheit (6) verbundenen Datenverarbeitungseinheit (8), die zur Erfassung der Zuordnung einzelner schlauchartiger Gebilde zu einer Dornkennung des Domes (1), auf dem das schlauchartige Gebilde hergestellt wurde, und/oder zur Erfassung der Menge der auf einem Dorn (1) hergestellten, schlauchartigen Gebilde eingerichtet ist, wobei in der Dornoberfläche eine Einsenkung (3) ist und ein Funktransponder (4) in die Einsenkung (3) eingelassen und mit einer Kunststoffmasse in der Einsenkung (3) festgelegt ist, so dass die Kunststoffmasse im Bereich der Einsenkung (3) die Dornoberfläche bildet, wobei der Funktransponder (4) ein passiver Transponder ist, der bei einer drahtlosen Abfrage **durch** ein Funksignal mit Energie des Funksignals versorgt wird und mit Hilfe dieser Energie im Funktransponder (4) gespeicherte Information über den zugeordneten Dorn (1) aussendet.

2. Fertigungseinrichtung nach Anspruch 1, bei der der Dorn (1) aus Metall gebildet und in der Einsenkung (3) zwischen dem Metalldorn (1) und dem Funktransponder (4) eine Schicht aus der Kunststoffmasse vorgesehen ist.

3. Fertigungseinrichtung nach Anspruch 1 oder 2, bei der der Dorn (1) aus einer Aluminiumlegierung gebildet ist.

## Claims

1. Production device (5) for tubular structures produced by extruding rubber or plastic onto tubular mandrels (1) that are continuously coupled to one another and transported through the production device in a direction of advancement, **characterized in that** the mandrels are provided with a radio transponder (4), which is intended for storing and emitting a mandrel identification assigned to the mandrel (1), **characterized by** at least one transponder reading unit (6) with a radio antenna (7) for reading information stored in radio transponders (4) of the mandrels (1) and a data processing unit (8), which is connected to the at least one transponder reading unit (6) and is designed for detecting the assignment of individual tubular structures to a mandrel identification of the mandrel (1) on which the tubular structure has been produced and/or for detecting the quantity of tubular structures produced on a mandrel (1), wherein there is a depression (3) in the mandrel surface and a radio transponder (4) is embedded in the depression (3) and is fixed in the depression (3) by a polymer composition such that the polymer composition forms the mandrel surface in the region of the depression (3), wherein the radio transponder (4) is a passive transponder which, during a wireless enquiry by a radio signal, is supplied with energy of the radio signal and with the aid of this energy emits information concerning the assigned mandrel (1) that is stored in the radio transponder (4).

2. Production device according to Claim 1, in which the mandrel (1) is formed from metal and a layer of the polymer composition is provided in the depression (3) between the metal mandrel (1) and the radio transponder (4).

3. Production device according to Claim 1 or 2, in which the mandrel (1) is formed from an aluminium alloy.

## Revendications

1. Dispositif de fabrication (5) pour éléments tubulaires par extrusion de caoutchouc et/ou plastique sur des mandrins tubulaires (1) couplés consécutivement les uns aux autres et transportés dans une direction d'avance à travers le dispositif de fabrication, **caractérisé en ce que** les mandrins sont pourvus d'un transpondeur radio (4), qui est prévu pour mémoriser et émettre un identificateur de mandrin attribué à un mandrin (1), **caractérisé par** au moins une unité de lecture de transpondeur (6) comportant une antenne radio (7) pour lire des informations mémorisées dans les transpondeurs radio (4) des mandrins (1) et une unité de traitement de données (8) reliée à l'au moins une unité de lecture de transpondeur (6), qui est conçue afin de détecter l'affectation d'éléments tubulaires individuels à un identificateur de mandrin du mandrin (1), sur lequel l'élément tubulaire a été fabriqué, et/ou afin de détecter la quantité des éléments tubulaires fabriqués sur un mandrin (1), dans lequel un affaissement (3) est réalisé dans la surface du mandrin et un transpondeur radio (4) est inséré dans l'affaissement (3) et est immobilisé avec une masse de plastique dans l'affaissement (3), de sorte que la masse de plastique forme la surface du mandrin dans la région de l'affaissement (3), dans lequel le transpondeur radio (4) est un transpondeur passif, qui est alimenté lors d'une interrogation sans fil par un signal radio avec l'énergie du signal radio et émet à l'aide de cette énergie les informations mémorisées dans le transpondeur radio (4) relatives au mandrin (1) affecté.

2. Dispositif de fabrication selon la revendication 1, dans lequel le mandrin (1) est fabriqué en métal et une couche de masse de plastique est prévue dans l'affaissement (3) entre le mandrin en métal (1) et le transpondeur radio (4).

3. Dispositif de fabrication selon les revendications 1 ou 2, dans lequel le mandrin (1) est fabriqué dans un alliage d'aluminium.
